# EUROPEAN PATENT SPECIFICATION

(11) **EP 1 222 117 B1**
(45) Date of publication and mention of the grant of the patent: **25.01.2006**
(21) Application number: 00970706.8
(22) Date of filing: 10.10.2000
(51) Int. Cl.: B65D 5/38, B65D 5/54, B65D 5/66

(54) **CARTON AND CARTON BLANK**
KARTONVERPACKUNG UND ZUSCHNITT DAFÜR
CARTON ET BOITE PLIANTE A VERROUILLAGES SUR PAROIS LATERALES

(30) Priority: 07.10.1999 GB 9923678; 07.10.1999 GB 9923679; 19.11.1999 GB 9927362; 21.06.2000 GB 0015024
(43) Date of publication of application: 17.07.2002
(73) Proprietor: MeadWestvaco Packaging Systems LLC, Stamford, Connecticut 06905 (US)
(72) Inventor: AUCLAIR, Jean-Michel, F-36000 Chateauroux (FR)
(74) Representative: Hepworth, John Malcolm
(86) International application number: PCT/US2000/027926
(87) International publication number: WO 2001/025097

(56) References cited:
- US-A- 1 928 889
- US-A- 2 686 627
- US-A- 3 735 914
- US-A- 3 900 104
- US-A- 4 175 675
- US-A- 4 189 087

## Description

The invention relates to a carton or sleeve for accommodating one or more articles for example information discs, foodstuff or the like formed from one or more blanks of paperboard or other suitable foldable sheet material and more particularly to a sleeve capable of being formed into a sealed compartment comprising an inner tray and outer sleeve.

It is desirable for cartons containing articles such as foodstuff or information discs to be enclosed to protect the or each article. Furthermore, the carton should preferably be reclosable to allow it to be reused.

One example of reclosable sleeves formed from one or more blanks of cardboard is found in US 3,078,030 which illustrates a carton having an integral hinged top which is reclosable. The top is provided by a front cover panel and a spacer panel secured to one side of the front cover panel to interfit with a mating upper portion of the front panel of a box. Fastening means is formed from a detached double layer portion of the front panel. However, the detached portion is attached to the inside surface of the cover flap resulting in a stepped non-flat front surface.

In cartons where articles are positioned next to one another in abutment, it can be difficult to gain access to the interior of the carton. One known solution is to open the carton from the side or end but this is undesirable because it tends to destroy the integrity of the carton. Another solution is to use a tear panel with a pull tab which is undesirable because it can be inadvertently pulled or removed completely. Examples of this general carton type are illustrated in US 2 122 480 and US 3 735 914.

The present invention and its preferred embodiments seek to overcome or at least mitigate the problems of the prior art.

One aspect of the invention provides a carton for packaging one or more articles, for example frozen or chilled foodstuffs, which carton comprises an inner tray and a tubular outer cover part which tray and cover part are slidable with respect to one another characterised in that the inner tray is provided with a plurality of panels for forming a void and wherein an aperture is defined in one or more of the panels forming the void to enable a user to engage an edge of the aperture to facilitate slidable movement of the inner tray relative to the outer cover part.

Preferably, a push tab is provided which can be depressed into the void to reveal the aperture. According to an optional feature of this aspect of the invention a tear panel is connected to a panel of the outer cover part conceals the aperture so that the tear panel must be removed before the aperture may be revealed.

Preferably, the tear panel is defined by a tear line which tear line extends into an adjacent carton wall of the outer cover portion to define a cutout in the adjacent carton wall when the tear panel is torn open, thereby to aid access to articles held in the carton.

According to an optional feature of this aspect of the invention a glue flap is hingedly connected to the tear panel.

According to an optional feature of this aspect of the invention the void is further defined by an internal partition adapted to prevent the or each article from moving into the void.

Preferably, the internal partition is provided by a support member connecting the top and bottom walls to protect the articles from being damaged.

Preferably, the partition support member is hingedly connected to the base wall and the push tab is foldable to be engaged with the support member to reclose the carton after the tear panel is torn open.

According to an optional feature of this aspect of the invention the outer cover part is provided by a plurality of panels forming a tubular structure.

Preferably the inner tray is connected to the outer cover part by a connecting panel arrangement to limit relative slidable movement therebetween.

Preferably, the connecting panel arrangement is struck from and hingedly connected to one of the panels forming the outer cover part.

According to an optional feature of this aspect of the invention the connecting panel arrangement for connecting the inner tray to the outer cover part, comprises a first panel secured to a section of an end wall of the inner tray, and a second panel hingedly interconnected to the first panel and to the outer cover portion, the first and second panels being arranged so as to limit relative movement of the inner tray and outer cover parts.

Preferably, when the tray is closed, the second panel substantially overlies the inner tray.

According to an optional feature of this aspect of the invention the outer cover part has closed ends including a top, base and side walls, wherein the void is defined by slanted end wall of the outer cover part and the tray end wall to protect the contents of the tray from being damaged.

Preferably, the slanted end wall defines an acute angle with the outer cover part bottom wall which the tray base wall overlies to support the contents thereon and the tray end wall extends upwardly from the tray base wall to its free end for engaging the junction between the slanted end wall and the shell top wall).

A second aspect of the invention provides a blank for forming a carton comprising a base panel, opposed side and end panels hingedly secured to the base panel for forming an inner tray, characterised in that a second blank is provided comprising a top panel, opposed side panels and a base panel hingedly connected together to form a tubular outer cover portion wherein the inner tray or tubular outer cover part is provided with a plurality of panels for forming a void within the set up tray and an aperture defined in one or more of the panels forming the void.

Preferably, a push tab is hingedly connected to an edge of the aperture.

According to an optional feature of this aspect of the invention a tear panel connected to a panel of the outer cover part conceals the aperture so that the tear panel must be removed before the aperture may be revealed.

Preferably, the tear panel is defined by a tear line which tear line extends into an adjacent wall panel of the outer cover part to define a cutout in the adjacent wall panel when the tear panel is torn open.

Preferably the push tab is hingedly connected to a tear line.

According to an optional feature of this aspect of the invention wherein an internal partition panel is connected to one of the panels forming the void.

According to an optional feature of this aspect of the invention the inner tray is connected to the outer cover part by a connecting panel arrangement to limit relative slidable movement therebetween in a set up carton.

Preferably, the connecting panel arrangement for connecting the inner tray to the outer cover part, comprises a first panel secured to an end section of a top cover panel of the outer tray, and a second panel hingedly interconnected to the first panel and to an outer securing panel.

A third aspect of the invention provides a carton, the plurality of panels forming a tubular section at one end of the tray wherein an aperture is defined in a first panel of the tubular section,, said tubular structure forms the void (V), a second panel provided in the cover part which co-operates with the first panel such that the inner tray and cover part are initially locked together by adhesive, a portion of the second panel forms the tear panel which is detachable from the second panel, there further comprises a cutout section in a wall of the inner tray adjacent the tubular section of the inner tray to aid access to the articles held in the tray.

Exemplary embodiments of the invention will now be described, by way of example only, with reference to the accompanying drawings in which: -
FIGURES 1A and 1B are plan views of a two-part blank for forming a carton according to a preferred embodiment of the invention;
FIGURE 2 illustrates the two-part blank of Figures 1A and 1B shown during the folding process;
FIGURE 3A is a perspective view of a carton formed from the two-part blank illustrated in Figures 1A and 1B in a set up and loaded condition;
FIGURE 3B is a perspective view of the carton of Figure 3A in which an inner tray of the carton has been partially pulled out to allow access to the contents of the carton;
FIGURE 4A is a perspective view of the carton of Figure 3A viewed from the opposite end thereof;
FIGURE 4B is a plan view of the carton of Figure 4A in which an inner tray of the carton has been partially pulled out to allow access to the contents of the carton;
FIGURES 5A and 5B are plan views of a two-part blank for forming a carton according to a further embodiment of the invention;
FIGURE 6A is a perspective view of a fully erected and loaded carton formed from the blank of Figures 5A and 5B;
FIGURE 6B is a perspective view of a portion of the carton of Figure 6A in which part of an end wall structure has been removed;
FIGURES 7A and 7B are perspective views of the carton of Figure 6A from opposite ends thereof in which an inner tray of the carton has been partially pulled out to allow access to the contents of the carton;

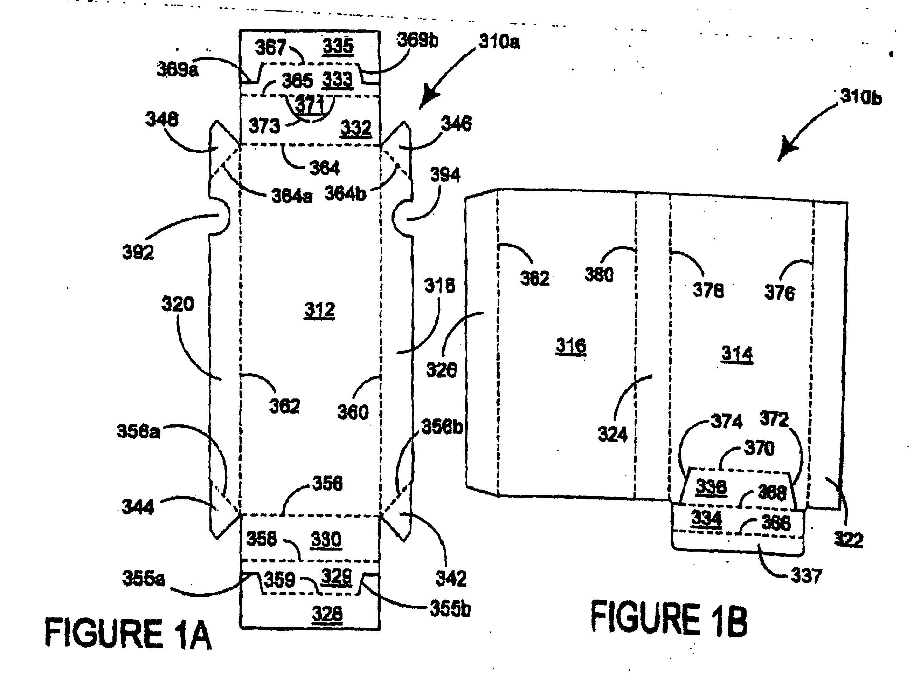

Referring to the Figures and in particular Figure 1, there is shown a two part blank, although it is envisaged that the blank could alternatively be constructed form a single part blank. One blank defines a tray part 310a comprising a base panel 312, opposed side wall panels 318, 320 hingedly connected to the base wall panel 312 along fold lines 360 and 362 respectively, and opposed end wall structures.

A first end wall structure includes panels for forming a void, the purpose of which is described in more detail below. Thus the first end wall structure may comprise in series a first securing panel 328, a first strut panel 329 and first end wall panel 330, hingedly connected along fold lines 359 and 358 respectively. First end wall panel 330 is connected to base panel along fold line 356. Similarly, a second end wall structure also includes panels for forming a void. The second end wall structure may comprise in series a second securing panel 335, a second strut panel 333 and second end wall panel 332 hingedly connected along fold lines 367 and 365 respectively. Second end wall panel 332 is connected to base panel along fold line 364.

Recesses 392 and 394 are preferably provided in the side panels 320 and 318 to allow user's fingers to easily grasp an article held in the tray. In some embodiments, gusset panels 342, 346, 344 and 348 are provided to secure the end and side panels together, whereby they are hingedly interconnected to end edges of the tray side panels 318, 320 respectively. In this embodiment, each gusset panel is hingedly connected to the side panels 318, 320 along fold lines 356a, 356b, 364a, 364b, the fold lines being angled acutely in relation to corresponding side panel fold lines 360, 362. In alternative classes of embodiment, the angle may be adjusted, or an alternative gusset panel configuration used without departing from the scope of the invention.

A push tab 371 defined by cut line 373 and fold line 365 is provided in one of the panels forming the void. In the first embodiment, the push tab is provided on the outer panel forming the slanted end wall. The tab may be substantially semi-circular in shape, in other embodiments, alternative shapes of tabs may be provided, and the tab may be defined in part by a tear line instead of a cut line.

In a particularly preferred embodiment, non-linear cut lines 355a, 355b and 369a, 369b extend from the ends of fold lines 359 and 367 respectively to provide flaps which extend into the void to be placed in face contacting relationship with base panel 312.

Turning to the cover portion 310b shown in Figure 1B, there comprises a plurality of panels adapted to provide an outer cover for the tray. For example, a first side cover panel 322, top cover panel 314, second side cover panel 324, base cover panel 316 and securing flap 326 are hingedly interconnected in series along fold lines 376, 378, 380 and 382 respectively.

A connecting panel arrangement to secure the cover portion 310b to the tray is provided. One suitable arrangement comprises first, second and third connecting panels 336, 334 and 337 hingedly connected in series along fold lines 368 and 366 respectively. First connecting panel 336 is struck from top cover panel 314, and hingedly interconnected thereto along fold line 370. Of course, the cover panel arrangement may be connected to one of the other panels forming the cover portion, or indeed be struck from one or more panels forming the tray, without departing from the scope of the invention. The sides of top cover panel are defined by tear lines 372, 374 which may be mutually divergent along at least a portion of their extent.

In alternative embodiments, it is however envisaged that the frangible lines 372, 374 may be replaced by cut/tear lines and additionally that the cut/tear lines may be co-extensive with a portion of the side edges of the upper cover panel 314. Furthermore, additional connecting panels may be struck from upper cover panel, if it is desired for the tray to be pulled out a greater distance from the cover.

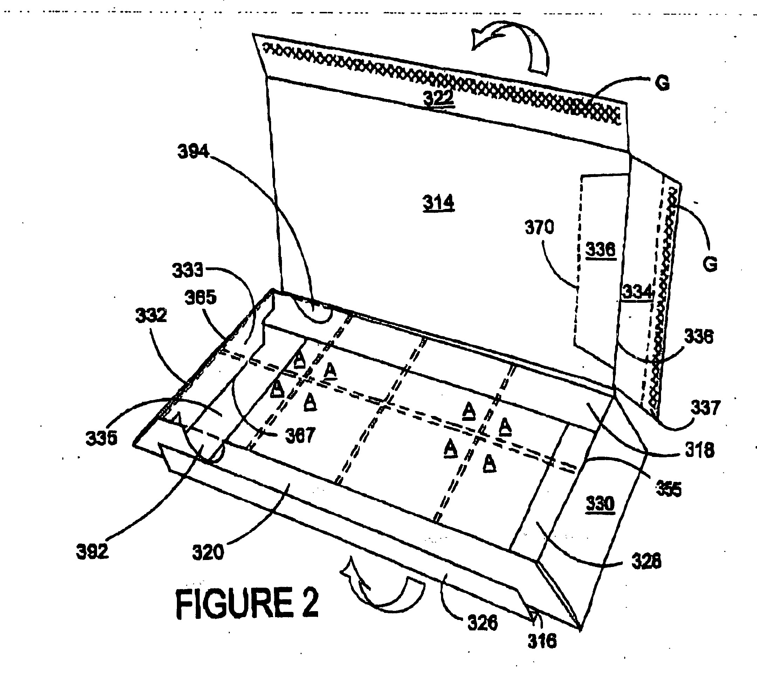

Referring to Figure 2, the carton is constructed as follows: tray side wall panels 318, 320 are folded out of alignment with tray base panel 312 along their respective fold lines 360, 362 into a substantially perpendicular relationship thereto. Gusset panels 342, 344, 346, 348 are preferably folded along fold lines 356b, 356a, 364b, 364a. End wall panels 330, 332 are folded inwardly about fold lines 356, 364 so as to be brought into face contacting relationship with the adjacent gusset panels, and are preferably secured thereto using glue or other means known in the art. Thereafter, strut panels 329, 333 are folded along fold lines 358 and 365 so as to be brought into a substantially upright position in relation to tray base panel 312, and securing panels 328, 335 are folded along fold lines 359 and 367 so as to be brought into face contacting relationship with tray base panel 312. Panels 328 and 335 are preferably secured to the tray base panel using glue or other suitable means known in the art. The provision of cut lines 369a and 369b permits a strengthened connection to be established between strut panels 329 and 333 and tray base panel 312, as there is effectively a glued portion either side of each strut panel.

Thereafter articles A, for example foodstuff is placed in the tray and the cover is then formed around it. In this embodiment, panels 322, 314, 324, 316 and 326 of the cover portion 310b are folded along fold lines 376, 378, 380, 382 respectively so as to form an open ended tubular structure which encircles tray portion 310a, with base cover panel 316 in substantially face contacting relationship with tray base panel 312. First side cover panel 322 is secured to third side coyer panel 326 using glue G, thereby forming a composite side wall panel. In other classes of embodiment, suitable alternative securing means known in the art may be used.

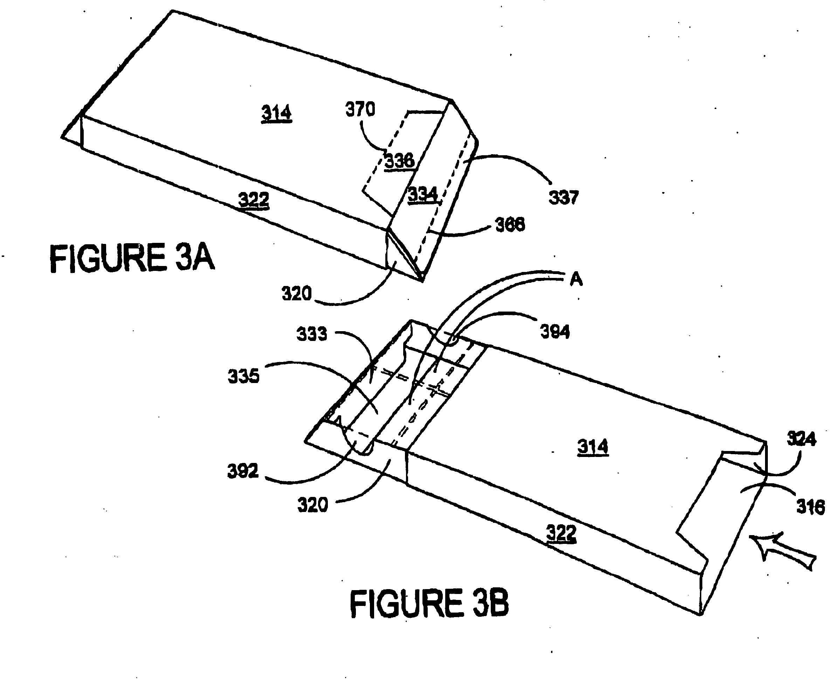

Finally, second and third connecting panels 334 and 337 are folded along fold line 368 so as to overlie first tray end panel 330 to be secured thereto. Glue G secures third connecting panel 337 to first end panel 330. It is desirable for panel 337 to be narrower than the width of the end panel 330, to improve the pivoting action of panels 334, 336 about fold line 366 and 370, in use. The carton is now fully erected and loaded illustrated in Figure 3A. Again, in other classes of embodiment, alternative securing means known in the art may be employed.

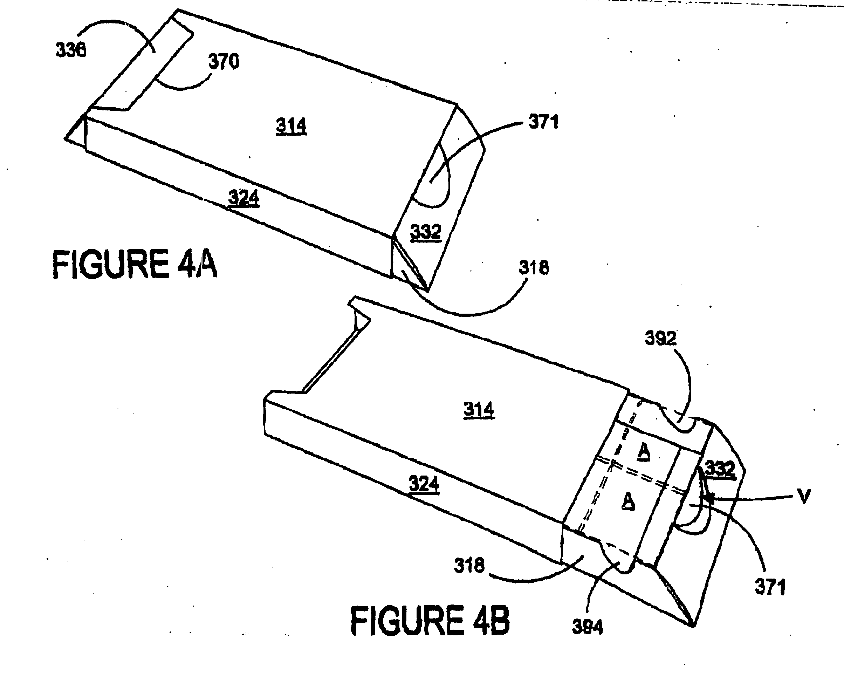

Referring now to Figures 3A, 3B,4A and 4B, in order for the end user to gain access to the contents of the carton, the user preferably depresses tab 371 (Figure 4) into the void V and engages the aperture thereby formed in second end panel 332. Beneficially, the articles are not interfered with by the user when this occurs.

Tray portion 310a may now be slid out of cover portion 310b as illustrated in Figures 3B and 4B, by the user pulling against an edge of the aperture formed by tab 371. During the sliding motion, connecting panel 336 becomes detached from, and moves out of alignment with upper cover panel 314 and connecting panel 334 hinged about fold line 366 so as to no longer overlie end panel 330 and the tray respectively. The connecting panels 334 and 336 are folded inwardly about fold line 370 until a relative position of the tray portion and cover portion is reached, in which the connecting panels 334 and 336 restrict further movement, and articles A may be accessed. In other embodiments, the maximum extent of the relative positions may be altered by altering the size and/or number of connecting panels 334, 336 provided. If the end user wishes to re-close the carton, the above outlined steps may be reversed.

Referring now to Figures 8A and 8B, there is shown an alternative embodiment of a two-part blank not forming part of the present invention. Like numerals have, where possible, been used for like parts of earlier embodiments, with the addition of the prefix "4".

Turning in particular to Figure 8A, not part of the present invention, there is shown a blank 410a, for constructing a tray portion of the carton, which blank comprises a plurality of panels which in this embodiment is provided by a tray base panel 412 hingedly interconnected to tray side panels 418 and 420 along fold lines 460 and 462 respectively. Likewise, first and second tray end panels 430 and 431 are hingedly interconnected to end edges of the base panel 412 along fold lines 464 and 456 respectively.

Preferably, there is provided gusset panels 442 and 444 that are hingedly interconnected to tray side panels 420 and 418 along fold lines 464b and 464a. Further, gusset arrangements 446 and 448, preferably, hingedly interconnect adjacent edges of the tray end panel 431 and side panels 418, 420. Gusset arrangements 446, 448 are similarly configured and, therefore, only arrangement 446 is described in further detail.

Arrangement 446 comprises a first gusset panel 450 hingedly interconnected to tray side panel 420 along fold line 489 which, in this embodiment, is an extension of fold line 456. Similarly, second gusset panel 452 is hingedly interconnected to tray end panel 430 along fold line 491, fold line 491 being, in this embodiment, an extension of fold line 462. First and second gusset panels 450, 452 mutually hingedly interconnect along fold line 488.

As is illustrated in Figure 8A, fold line 488 intersects with fold lines 489 and 491 at the corner of tray base panel 412. It is, however, envisaged that in alternative embodiments, a portion of one, or both of gusset panels 450, 452 may be cut away, adjacent the corner of tray base panel 412, so as to assist the folding of the gusset arrangement 444 during erection of the carton.

In alternative embodiments, it is anticipated that fold lines 489 and 491 may not extend parallel to fold lines 456 and 462 respectively such that trapezoidal cartons may be formed.

Of course, other known gusset arrangements can be used instead without departing from the scope of invention.

A tuck-in flap 435 may be provided, that is hingedly connected to the upper edge of tray end panel 431 along fold line 458. To ease the tucking-in procedure by an end user, at least one corner of flap 435 may be bevelled. Fold line 458 is advantageously interrupted by a cut such that a thumb tab 455 is formed that protrudes slightly into flap 435.

Turning to the outer cover blank 410b, there comprises a first side cover panel 422, top cover panel 414, second side cover panel 424, base cover panel 416 and a securing flap 426 hingedly interconnected in series along fold lines 476, 478, 480, and 482 respectively. Recesses 492, 494, 496 are advantageously provided in first and second side cover panels 422, 424 and securing flap 426 respectively, so as to enable a user to hold the inner tray, described in more detail below. A connecting panel arrangement similar to that described above is provided to connect the cover 410b to the inner tray 410a and to limit the slidable movement between the two parts. The arrangement is similar to the previously described embodiment in that there comprises a series of connecting panels 436, 434, 432, 433 hingedly interconnected along fold lines 468, 466 and 465 respectively. Connecting panel 436 is hingedly connected to top cover panel 414 along fold line 470.

The connecting panels 434 and 436 are preferably struck from upper cover panel 414 and the side edges thereof are advantageously defined by frangible lines 472 and 474 which in this embodiment are parallel and spaced from fold lines 476 and 478. In alternative embodiments, they may be mutually divergent along at least a portion of their extent; and it is further envisaged that the frangible lines 472, 474 may be replaced by cut/tear lines and additionally that the cut/tear lines may be co-extensive with a portion of the side edges of the upper cover panel 414.

Along the opposing end of cover 410a, a first end cover panel 438 is hingedly connected to the opposing end edge of top cover panel along weakened fold line 484. Fold line 484 is preferably interrupted by slot 454 arranged so as to co-operate with thumb-tab 455 when the blank is erected from a carton.

A second end cover panel 440 is preferably hingedly connected to an end edge of base cover panel 416 along weakened fold line 486. Protrusions 441a and 441b are preferably hingedly connected to the side edges of end cover panel 440 along fold lines 443a and 443b, although in other embodiments, the protrusions may be formed integrally with the second end cover panel 440.

In order to construct the carton reference is made to Figure 8A, 8B and 9A, which depict an embodiment outside of the scope of the present invention, a tray side and end wall panels 418, 420 and 430, 431 of tray portion 400a are folded out of alignment with tray base panel 412 along their respective fold lines 460, 462 and 464, 456 into a substantially perpendicular relationship thereto. Gusset arrangements 446 and 448 are preferably arranged to be disposed inwardly of the side and end panels 418, 420 and 431, and are advantageously secured to either tray end panels 431 or their respective tray side panels 418 and 420 using glue or other means known in the art to maintain the tray portion 410a in a set-up condition. In alternative embodiments, it is however envisaged that the gusset arrangements need not be secured such that second tray end panel 431 may be folded back to be substantially co-planar with tray base panel 412 to gain access to the interior of the carton by the end user. Gusset panels 444 and 442 are folded along fold lines 464a and 464b, and are secured to tray end panel 430 using glue or other suitable means known in the art.

Tuck-in flap 435 is substantially folded out of alignment with end panel 431 so as to be in a substantially spaced parallel relationship with tray base panel 412. The tray is in a set up condition to be loaded with articles A, such as foodstuff.

Turning to Figure 8B, first side cover panel 422, second side cover panel 425, base cover panel 416 and securing flap 426 of cover portion 410b are then folded out of mutual alignment along fold lines 476, 478, 480 and 482 respectively so as to encircle the tray portion in a similar manner to the cover portion 310b of the previous embodiment. Securing flap 426 is secured to tray side panel 422 using glue, thereby forming a composite side wall panel. In other classes of embodiment, alternative securing means known in the art may be used.

Connecting panels 432 and 433 are folded downwardly about fold line 466, so as to be brought into face contacting relationship with tray end panel 430. Glue or other suitable means known in the art is used to secure connecting panel 433 to end panel 430. Finally, cover end panels 438 and 440 are folded into a substantially perpendicular relationship with upper and base panels 414 and 416 respectively along fold lines 484 and 486 such that end panels 438 and 440 are in overlapping relationship with each other and may be secured together by glue, or other means known in the art, to form a composite end cover wall which is in substantially face contacting relationship with tray end panel 430. Thus, tab 455 protrudes through slot 454 as is illustrated in Figure 12A.

Referring to Figure 9B, not part of the present invention, in order for the end user to gain access to the interior of the carton, composite cover end wall comprising panels 438 and 440, must be first removed by tearing along weakened fold lines 484 and 486. This may advantageously be achieved by the user engaging and pulling protrusions 441a and 441b thereby removing the composite wall.

The user should then grip the tray at the portions revealed by cutaway portions 492 and 494 and slide the tray out of the sleeve as illustrated in Figures 10A and 10B (which do not form part of the present invention) such that articles A may be retrieved. The user can grip the end of the tray revealed by the recesses 492, 496. If second tray end panel 431 is free to hinge about fold line 456, thumb tab 455 may be used to pull panel 431 back into co-linear arrangement with tray base panel 412. If gusset arrangements 446 and 448 prevent the hinging action of second tray end panel 431, then thumb tab 455 may be used to slide the tray out.

During the sliding motion, for those embodiments with a connecting arrangement, the connecting panels 432, 434 and 436 become detached from, and move out of alignment with upper cover panel 414 until a relative position of the tray portion and cover portion is reached, in which the connecting panels 432, 434 and 436 restrict further movement, and articles A may be accessed more easily. The connecting panels 432, 434 and 436 pivot about fold line 465 which is positioned intermediate the ends of end panel 430. More preferably, end panel 433 is connected to a lower part of end panel 430 so that fold line 465 is in a central position. This configuration improves the pivoting action. In other embodiments, the maximum extent of the relative positions may be altered by altering the size and/or number of connecting panels provided.

If the end user wishes to re-close the carton, the above outlined steps may be reversed, and the tray re-closed by tucking in panel 435 beneath upper cover panel 414.

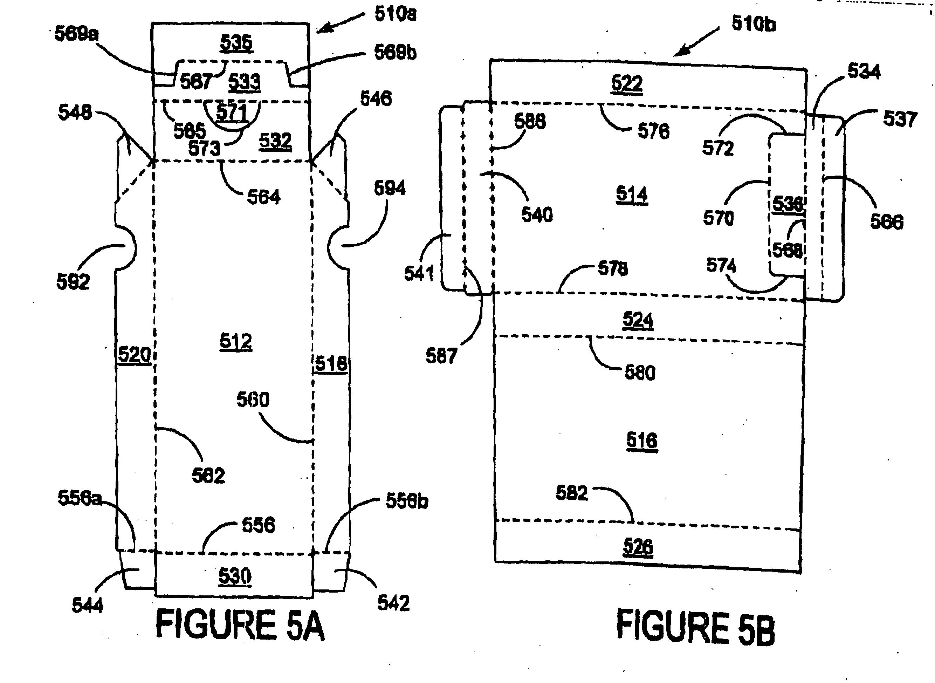

Referring now to Figures 5A and 5B, there is shown a further embodiment of the present invention. Like numerals have, where possible, been used for like parts of the embodiment shown in Figures 1 to 4, with the addition of the prefix "5".

In this embodiment, it can be seen that the panel arrangement of the tray portion 510a incorporating end panels 532, 533 and 535 is substantially identical to the end structure of the embodiment of Figure 1 which comprises panels 332, 333 and 335. The opposing end panel arrangement incorporating first end panel 530 is substantially identical to the end panel arrangement 430, 442, 444 of the embodiment of Figure 5 (not part of the present invention)

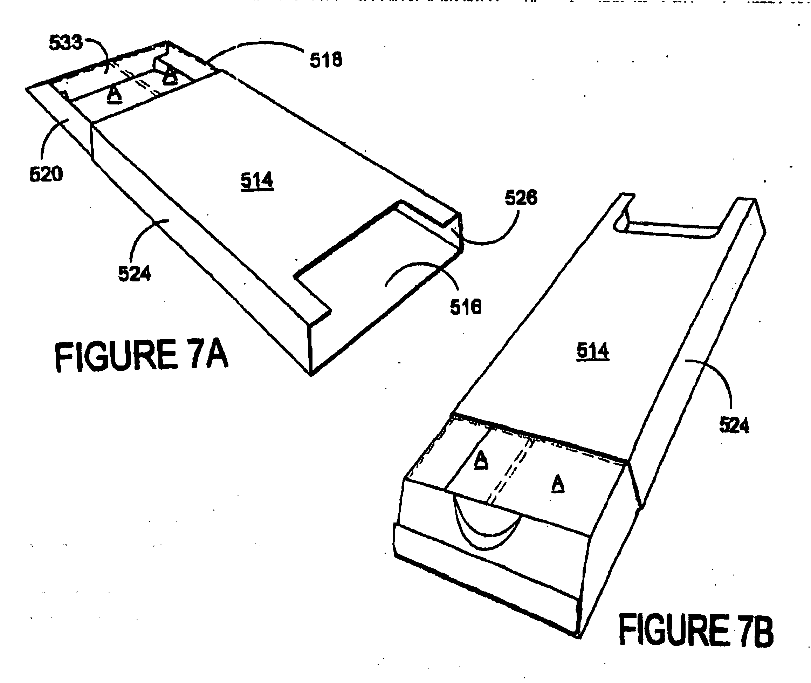

Referring now to Figure 5B in particular, the connecting panels 536, 534, 537 are arranged in a similar manner to the connecting panels 336, 334, 337 of the embodiment of Figure 7, but in this embodiment cut lines 572 and 574 are arranged so as to be parallel and spaced from fold lines 576 and 578. At the opposite end of top cover panel 514, there is provided a tear panel 540 hingedly connected to upper cover panel 514 along weakened fold line 586. A glue flap 541 is further hingedly connected to tear panel 540 along weakened fold line 587.

The carton is erected in a similar manner to the cartons of the embodiments of Figures 7 and 11, the flap 541 being secured to panel 532 using glue or other suitable means known in the art, such that tear panel 540 overlies tab 571 and connecting panel 537 similarly being secured to panel 530 using glue or other suitable means. Tear panel 540 provides additional protection to push tab 571 to prevent inadvertent opening prior to end use and to assist in maintaining the integrity of the package.

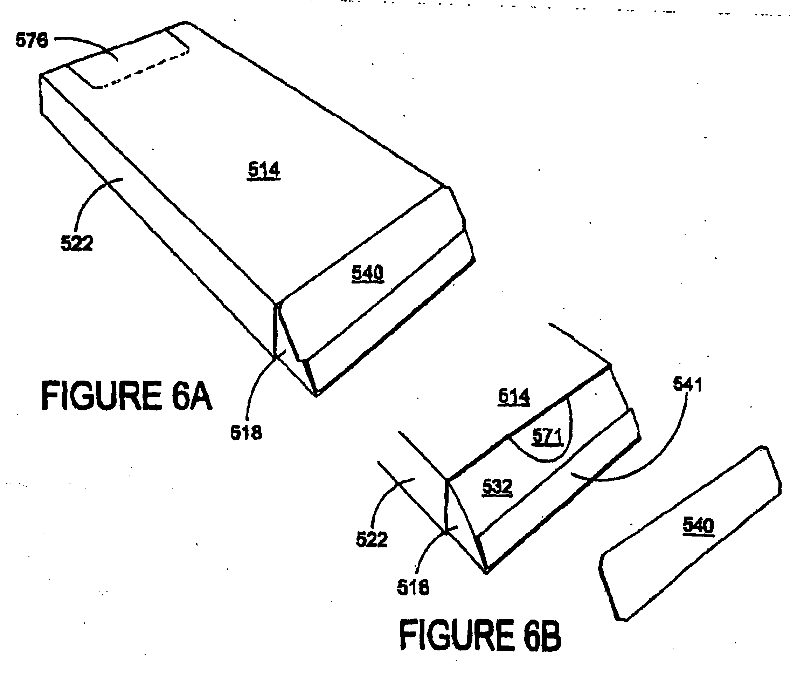

The fully erected carton is shown in Figure 6A. In order to gain access to articles A (Figure 7A) contained within the carton, tear panel 540 is removed, as illustrated in Figure 6B, thereby revealing tab 571 which may then be pushed inwardly into the void by the user, in order to engage panel 532. The tray portion may then slide out of the cover portion in a similar manner to the previous embodiments as illustrated in Figure 3B

As mentioned above it is envisaged that the carton or sleeve of the present invention can be formed by a series of sequential folding and gluing operations. For example, the sleeve could be part constructed whereby side flaps and cover panel are secured together before loading it with an article. Alternatively, it is envisaged that the carton could be supplied fully constructed in a flat collapsed condition with one of the side or end panels unsecured along one edge to provide an aperture in the side or to end load the sleeve with the or each article.

It is envisaged that the carton of the present invention can be formed by a series of sequential folding and gluing operations in a straight line machine so that the carton is not required to be rotated or inverted to complete its construction. The folding process is not limited to that described above and may be altered according to particular manufacturing requirements.

It will be recognised that as used herein, the terms "top", "bottom", "side", "end", "inner", "outer", "upper" and "lower" with respect to the panels of the carton (or carton blank) are relative terms, and that the carton (formed from the blank) may be re-oriented as necessary or as desired. It will be further recognised that rather than the bottom wall being formed from the interlocked panels, the carton blank may be rearranged whereby some other wall such as a top wall or a side wall is formed from the interlocked panels. Any reference to hinged connection should not be construed as necessarily referring to a single fold line only: indeed it is envisaged that hinged connection can be formed from one or more of one of the following, a score line, a frangible line or a fold line, without departing from the scope of invention.

The invention and its preferred embodiments relate to a carton or a sleeve which is shaped to provide satisfactory rigidity to hold items such as information discs for example floppy discs or foodstuffs with a degree of flexibility. The shape of the blank minimises the amount of paperboard required for the carton. The carton can be constructed from a flat collapsed condition to position of use and/or loaded by hand or automatic machinery. It is anticipated the invention can be modified without departing from the scope of the invention: for example, side and end panels can be increased in height or width to provide a carton to receive one or more articles of different shapes and/or sizes. Furthermore, the tearing structure, end wall structure, the cover panel and re-closable tray structure shown in the drawings can be applied to other known carton types, for example fully enclosed cartons for beverage containers or for foodstuffs, without departing from the scope of invention.

Beneficially the embodiment of the invention hereinbefore described provides a structure that is sufficiently strong to retain articles and to provide an integral sleeve. In particular, the end walls of the tray provide additional strength to the carton as they act as support members between top and base panels of the outer shell or cover portion. The use of paperboard material provides an "environmentally" friendly alternative and the sleeves made from paperboard can include printed matter for marketing purposes.

## Claims

1. A carton for packaging one or more articles (A), for example frozen or chilled foodstuffs, which carton comprises an inner tray (310a, 510a,) and a tubular outer cover part (310b, 510b) which tray and cover part are slidable with respect to one another **characterised in that** the inner tray (310a, 510a,) is provided with a plurality of panels (332, 333, 335; 532, 533, 535,) for forming a void (V) and wherein an aperture is defined in one or more of the panels (332, 333; 532, 533) forming the void (V) to enable a user to engage an edge of the aperture to facilitate slidable movement of the inner tray (310a, 510a) relative to the outer cover part (310b, 510b).

2. A carton as claimed in claim 1 wherein a push tab (371, 571) is provided which can be depressed into the void (V) to reveal the aperture.

3. A carton as claimed in claim 1 or claim 2 wherein a tear panel (540) connected to a panel (514) of the outer cover part conceals the aperture so that the tear panel (540) must be removed before the aperture maybe revealed.

4. A carton as claimed in claim 3 wherein the tear panel (540) is defined by a tear line (586) which tear line (586) extends into an adjacent carton wall (514) of the outer cover portion (510b) to define a cutout in the adjacent carton wall (514) when the tear panel is torn open, thereby to aid access to articles (A) held in the carton.

5. A carton as claimed in claim 3 or claim 4, when dependent upon claim 2, wherein a glue flap (541) is hingedly connected to the tear panel (540).

6. A carton as claimed in any preceding claim wherein the void (V) is further defined by an internal partition (333, 533) adapted to prevent the or each article (A) from moving into the void (V).

7. A carton as claimed in claim 6 wherein the internal partition (333, 533) is provided by a support member connecting the top (314, 514) and bottom (316, 516) walls to protect the articles (A) from being damaged.

8. A carton as claimed in claim 7 wherein the partition support member is hingedly connected to the base wall and the push tab is foldable to be engaged with the support member to reclose the carton after the tear panel is torn open.

9. A carton as claimed in any preceding claim wherein the outer cover part (310b, 510b) is provided by a plurality of panels (322, 314, 324, 316; 522, 514, 524, 516) forming a tubular structure.

10. A carton as claimed in any preceding claim wherein the inner tray (310a, 510a) is connected to the outer cover part (310b, 510b) by a connecting panel arrangement (334, 336; 534, 536) to limit relative slidable movement therebetween.

11. A carton as claimed in claim 10 wherein the connecting panel arrangement (334, 336; 534, 536) is struck from and hingedly connected to one of the panels (314; 514) forming the outer cover part (310b, 510b).

12. A carton as claimed in claim 10 or claim 11 wherein the connecting panel arrangement (334, 336; 534, 536) for connecting the inner tray (310a, 510a) to the outer cover part (310b, 510b), comprises a first panel (334; 534) secured to a section of an end wall (330; 530) of the inner tray, and a second panel (336; 536) hingedly interconnected to the first panel (314; 514) and to the outer cover portion (310b; 510b), the first and second panels being arranged so as to limit relative movement of the inner tray and outer cover parts.

13. A carton as claimed in claim 12 wherein when the tray is closed, the second panel (336; 536) substantially overlies the inner tray (310a, 510a).

14. A carton as claimed in any preceding claim wherein the outer cover part (310b; 510b) has closed ends including a top (314; 514), base (316; 516) and side walls (332, 324; 522, 524), wherein the void (v) is defined by slanted end wall (330, 332; 532) of the outer cover part (310b; 510b) and the tray end wall (330, 332; 530, 532) to protect the contents of the tray from being damaged.

15. A carton as claimed in claim 14 wherein the slanted end wall (330, 332; 532) defines an acute angle with the outer cover part (310b; 510b) bottom wall (316; 516) which the tray base wall (312; 512) overlies to support the contents thereon and the tray end wall (330, 332; 532) extends upwardly from the tray base wall (312; 512) to its free end (355, 365) for engaging the junction between the slanted end wall (330, 332; 532) and the shell top wall (314; 514).

16. A blank (310a; 510a) for forming a carton comprising a base panel (312; 512), opposed side (318, 320; 518, 520) and end panels (330, 332; 530, 532) hingedly secured to the base panel (312; 512) for forming an inner tray, **characterised in that** a second blank (310b; 510b) is provided comprising a top panel (314; 514), opposed side panels (322, 324; 522, 524) and a base panel (316; 516) hingedly connected together to form a tubular outer cover portion wherein the inner tray or tubular outer cover part is provided with a plurality of panels (329, 333; 533) for forming a void (v) within the set up tray and an aperture defined in one or more of the panels (332; 532) forming the void.

17. A blank as claimed in claim 16 wherein a push tab (371; 571) is hingedly connected to an edge (365; 565) of the aperture.

18. A blank as claimed in claim 16 or claim 17 wherein a tear panel (540) connected to a panel (514) of the outer cover part (510b) conceals the aperture so that the tear panel (540) must be removed before the aperture may be revealed.

19. A blank as claimed in claim 18 wherein the tear panel (540) is defined by a tear line (586) which tear line extends into an adjacent wall panel (514) of the outer cover part (570b) to define a cutout in the adjacent wall panel when the tear panel is torn open.

20. A blank as claimed in claim 19 wherein the push tab (571) is hingedly connected to a tear line (573).

21. A blank as claimed in any of claims 16 to 20wherein an internal partition panel (328, 335; 535) is connected to one of the panels (329, 333; 533) forming the void.

22. A blank as claimed in any of claims 16 to 21 wherein the inner tray (310a; 510a) is connected to the outer cover part (310b; 510b) by a connecting panel arrangement (334, 336; 534, 536) to limit relative slidable movement therebetween in a set up carton.

23. A blank as claimed in claim 22 wherein the connecting panel arrangement (334, 336; 534, 536) for connecting the inner tray (310a; 510a) to the outer cover part (310b; 510b), comprises a first panel (336; 536) secured to an end section of a top cover panel (314; 514) of the outer tray (310b; 510b), and a second panel (334; 534) hingedly interconnected to the first panel (336; 536) and to an outer securing panel (337; 537).

24. A carton according to any of claims 1 or 2 wherein the plurality of panels (332, 333, 335, 532, 533, 535) form a tubular section at one end of the tray wherein an aperture is defined in a first panel of the tubular section, said tubular structure forms the void (V), a second panel provided in the cover part which co-operates with the first panel such that the inner tray and cover part are initially locked together by adhesive, a portion of the second panel forms the tear panel which is detachable from the second panel, there further comprises a cutout section in a wall of the inner tray adjacent the tubular section of the inner tray to aid access to the articles held in the tray.

## Patentansprüche

1. Schachtel zum Verpacken eines oder mehrerer Gegenstände (A), wie beispielsweise gefrorene oder gekühlte Nahrungsmittel, wobei die Schachtel eine innere Schale (310a, 510a) und einen röhrenförmigen äußeren Abdeckabschnitt (310b, 510b) umfasst, wobei die Schale und der Abdeckabschnitt gegeneinander verschoben werden können, **dadurch gekennzeichnet, dass** die innere Schale (310a, 510a) mit einer Vielzahl von Wandflächen (332, 333, 335; 532, 533, 535) zum Ausbilden eines Hohlraums (V) bereitgestellt ist, wobei eine Öffnung in einer oder mehreren der Wandflächen (332, 333; 532, 533) definiert ist, die den Hohlraum (V) ausbilden, um einem Benutzer zu ermöglichen, eine Kante der Öffnung in Eingriff zu nehmen, um eine gleitende Bewegung der inneren Schale (310a, 510a) relativ zu dem äußeren Abdeckabschnitt (310b, 510b) zu erleichtern.

2. Schachtel nach Anspruch 1, wobei eine Drücklasche (371, 571) bereitgestellt ist, die in den Hohlraum (V) gedrückt werden kann, um die Öffnung freizulegen.

3. Schachtel nach Anspruch 1 oder 2, wobei eine Reißwandfläche (540), die mit einer Wandfläche (514) des äußeren Abdeckabschnitts verbunden ist, die Öffnung verdeckt, so dass die Reißwandfläche (540) entfernt werden muss, bevor die Öffnung freigelegt werden kann.

4. Schachtel nach Anspruch 3, wobei die Reißwandfläche (540) durch eine Reißlinie (586) definiert wird, wobei sich die Reißlinie (586) in eine angrenzende Schachtelwand (514) des äußeren Abdeckabschnitts (510b) erstreckt, um einen Ausschnitt in der angrenzenden Schachtelwand (514) zu definieren, wenn die Reißwandfläche aufgerissen wird, um somit den Zugang zu den in der Schachtel gehaltenen Gegenständen (A) zu erleichtern.

5. Schachtel nach Anspruch 3 oder 4, soweit diese von Anspruch 2 abhängen, wobei eine Klebeklappe (541) gelenkig mit der Reißwandfläche (540) verbunden ist.

6. Schachtel nach einem der vorhergehenden Ansprüche, wobei der Hohlraum (V) ferner durch eine innere Trenneinrichtung (333, 533) definiert ist, die ausgestaltet ist, den oder jeden Gegenstand (A) daran zu hindern, sich in den Hohlraum (V) zu bewegen.

7. Schachtel nach Anspruch 6, wobei die interne Trenneinrichtung (333, 533) durch ein Trägerelement bereitgestellt wird, das sich zwischen der Deckenwand (314, 514) und der Bodenwand (316, 516) erstreckt, um die Gegenstände (A) davor zu schützen, beschädigt zu werden.

8. Schachtel nach Anspruch 7, wobei das Trenneinrichtungsträgerelement gelenkig mit der Bodenwand verbunden ist und die Drücklasche faltbar ist, um mit dem Trägerelement in Eingriff gebracht zu werden, um die Schachtel wiederzuverschließen, nachdem die Reißwandfläche aufgerissen worden ist.

9. Schachtel nach einem der vorhergehenden Ansprüche, wobei der äußere Abdeckabschnitt (310b, 510b) von einer Vielzahl von Wandflächen (322, 314, 324, 316; 522, 514, 524, 516) bereitgestellt wird, die eine röhrenförmige Struktur ausbilden.

10. Schachtel nach einem der vorhergehenden Ansprüche, wobei die innere Schale (310a, 510a) durch eine verbindende Wandflächenanordnung (334, 336; 534, 536) mit dem äußeren Abdeckabschnitt (310b, 510b) verbunden ist, um die relative Gleitbewegung zwischen diesen zu beschränken.

11. Schachtel nach Anspruch 10, wobei die verbindende Wandflächenanordnung (334, 336; 534, 536) aus einer der Wandflächen (314; 514), die den äußeren Abdeckabschnitt (310b, 510b) ausbilden, ausgestanzt ist und gelenkig mit dieser verbunden ist.

12. Schachtel nach Anspruch 10 oder 11, wobei die verbindende Wandflächenanordnung (334, 336; 534, 536) zum Verbinden der inneren Schale (310a, 510a) mit dem äußeren Abdeckabschnitt (310b, 510b) eine erste Wandfläche (334; 534) umfasst, die an einen Bereich einer Endwand (330; 530) der inneren Schale befestigt ist, sowie eine zweite Wandfläche (336; 536), die gelenkig mit der ersten Wandfläche (314; 514) und dem äußeren Abdeckabschnitt (310b; 510b) verbunden ist, wobei die erste und die zweite Wandfläche angeordnet sind, die relative Bewegung der inneren Schale und der äußeren Abdeckabschnitte zu beschränken.

13. Schachtel nach Anspruch 12, wobei dann, wenn die Schale geschlossen ist, die zweite Wandfläche (336; 536) im Wesentlichen über der inneren Schale (310a, 510a) liegt.

14. Schachtel nach einem der vorhergehenden Ansprüche, wobei der äußere Abdeckabschnitt (510b) geschlossene Enden aufweist, die eine Deckenwand (514), eine Bodenwand (516) und Seitenwände (522, 524) einschließen, wobei der Hohlraum (V) durch eine abgeschrägte Endwand (532) des äußeren Abdeckabschnitts (510b) und der Schalenendwand (532) definiert wird, um den Inhalt der Schale davor zu schützen, beschädigt zu werden.

15. Schachtel nach Anspruch 14, wobei die abgeschrägte Endwand (532) einen spitzen Winkel mit der Bodenwand (516) des äußeren Abdeckabschnitts (510b) definiert, über der die Schalenbodenwand (512) liegt, um den Inhalt darauf zu tragen, und wobei sich die Schalenendwand (532) von der Schalenbodenwand (512) zu deren oberen Ende (365) aufwärts erstreckt, um die Verbindung zwischen der abgeschrägten Endwand (540) und der Deckenwand (514) in Eingriff zu nehmen.

16. Zuschnitt (310a; 510a) zum Ausbilden einer Schachtel, umfassend eine Bodenwandfläche (312; 512), gegenüberliegende Seitenwandflächen (318, 320; 518, 520) und Endwandflächen (330, 332; 530, 532), die gelenkig an eine Bodenwandfläche (312; 512) befestigt sind, um eine innere Schale auszubilden, **dadurch gekennzeichnet, dass** ein zweiter Zuschnitt (310b; 510b) bereitgestellt wird, umfassend eine Deckenwandfläche (314; 514), gegenüberliegende Seitenwandflächen (322, 324; 522, 524) und eine Bodenwandfläche (316; 516), die gelenkig miteinander verbunden sind, um einen röhrenförmigen äußeren Abdeckabschnitt auszubilden, wobei die innere Schale oder der röhrenförmige äußere Abdeckabschnitt mit einer Vielzahl von Wandflächen (332; 333; 532, 533) bereitgestellt ist, um einen Hohlraum (V) innerhalb der aufgerichteten Schale und eine Öffnung auszubilden, die in einer oder mehreren der Wandflächen (332; 532) definiert ist, die den Hohlraum ausbilden.

17. Zuschnitt nach Anspruch 16, wobei eine Drücklasche (371; 571) gelenkig mit einer Kante (365; 565) der Öffnung verbunden ist.

18. Zuschnitt nach Anspruch 16 oder 17, wobei eine Reißwandfläche (540), die mit einer Wandfläche (514) des äußeren Abdeckabschnitts (510b) verbunden ist, die Öffnung verdeckt, so dass die Reißwandfläche (540) entfernt werden muss, bevor die Öffnung freigelegt werden kann.

19. Zuschnitt nach Anspruch 18, wobei die Reißwandfläche (540) durch eine Reißlinie (586) definiert wird, wobei sich die Reißlinie in eine angrenzende Wandfläche (514) des äußeren Abdeckabschnitts (570b) erstreckt, um einen Ausschnitt in der angrenzenden Wandfläche zu definieren, wenn die Reißwandfläche aufgerissen wird.

20. Zuschnitt nach Anspruch 19, wobei die Drücklasche (571) gelenkig mit einer Reißlinie (573) verbunden ist.

21. Zuschnitt nach einem der Ansprüche 16 bis 20, wobei eine interne Trennwandfläche (333; 533) mit einer der Wandflächen (332; 532) verbunden ist, die den Hohlraum ausbilden.

22. Zuschnitt nach einem der Ansprüche 16 bis 21, wobei die innere Schale (310a; 510a) über eine verbindende Wandflächenanordnung (334, 336; 534, 536) mit dem äußeren Abdeckabschnitt (310b; 510b) verbunden ist, um die relative Gleitbewegung zwischen diesen in einer aufgerichteten Schachtel zu beschränken.

23. Zuschnitt nach Anspruch 22, wobei die verbindende Wandflächenanordnung (334, 336; 534, 536) zum Verbinden der inneren Schale (310a; 510a) mit dem äußeren Abdeckabschnitt (310b; 510b) eine erste Wandfläche (336; 536) umfasst, die an einen Endbereich einer Deckenabdeckwandfläche (314; 514) der äußeren Schale (310b; 510b) befestigt ist, sowie eine zweite Wandfläche (334; 534), die gelenkig mit der ersten Wandfläche (336; 536) und mit einer äußeren Befestigungswandfläche (337; 537) verbunden ist.

24. Schachtel nach Anspruch 1 oder 2, wobei die Vielzahl von Wandflächen (332, 333, 335, 532, 533, 535) einen röhrenförmigen Bereich an einem Ende der Schale ausbilden, wobei eine Öffnung in einer ersten Wandfläche des röhrenförmigen Bereichs definiert ist, wobei die röhrenförmige Struktur den Hohlraum (V) ausbildet, sowie eine zweite Wandfläche, die in dem Abdeckabschnitt bereitgestellt ist und mit der ersten Wandfläche zusammenwirkt, so dass die innere Schale und der Abdeckabschnitt anfänglich mittels Klebstoff miteinander verriegelt sind, wobei ein Abschnitt der zweiten Wandfläche die Reißwandfläche ausbildet, die von der zweiten Wandfläche abgenommen werden kann, wobei ferner ein Ausschnittbereich in einer Wand der inneren Schale angrenzend an den röhrenförmigen Bereich der inneren Schale umfasst wird, um den Zugang zu den Gegenständen zu erleichtern, die in der Schale gehalten werden.

## Revendications

1. Carton pour emballer un ou plusieurs article(s) (A), par exemple des aliments surgelés ou frais, lequel carton comprend un plateau intérieur (310a, 510a) et une partie couvercle extérieur tubulaire (310b, 510b), lesquels plateau et partie couvercle peuvent coulisser l'un par rapport à l'autre, **caractérisé en ce que** le plateau intérieur (310a, 510a) est muni d'une pluralité de panneaux (332, 333, 335 ; 532, 533, 535) pour former un vide (V) et où une ouverture est définie dans un ou plusieurs des panneaux (332, 333 ; 532, 533) formant le vide (V) pour permettre à un utilisateur d'attraper un bord de l'ouverture pour faciliter le mouvement coulissant du plateau intérieur (310a, 510a) par rapport à la partie couvercle extérieur (310b, 510b).

2. Carton selon la revendication 1, dans lequel une patte à presser (371, 571) est prévue, qui peut être enfoncée dans le vide (V) pour révéler l'ouverture.

3. Carton selon la revendication 1 ou 2, dans lequel un panneau à déchirer (540) connecté à un panneau (514) de la partie couvercle extérieur cache l'ouverture de telle manière que le panneau à déchirer (540) doit être retiré pour que l'ouverture puisse être révélée.

4. Carton selon la revendication 3, dans lequel le panneau à déchirer (540) est défini par une ligne de pointillés (586), laquelle ligne de pointillés (586) s'étend dans une paroi de carton voisine (514) de la partie couvercle extérieur (510b) pour définir une entaille dans la paroi de carton voisine (514) lorsque le panneau à déchirer est ouvert par déchirement, afin de faciliter l'accès aux articles (A) contenus dans le carton.

5. Carton selon la revendication 3 ou 4, lorsqu'elles dépendent de la revendication 2, dans lequel un rabat à colle (541) est connecté de façon articulée au panneau à déchirer (540).

6. Carton selon l'une quelconque des revendications précédentes, dans lequel le vide (V) est en outre défini par une cloison interne (333, 533) adaptée pour empêcher le ou les article(s) (A) de se déplacer dans le vide (V).

7. Carton selon la revendication 6, dans lequel la cloison interne (333, 533) est fournie par un élément de support qui s'étend entre des parois supérieure (314, 514) et inférieure (316, 516) pour empêcher les articles (A) d'être endommagés.

8. Carton selon la revendication 7, dans lequel l'élément de support de cloison est connecté de façon articulée à la paroi de base et la patte à presser est pliable pour être mise en prise avec l'élément de support pour refermer le carton après que le panneau à déchirer a été ouvert par déchirement.

9. Carton selon l'une quelconque des revendications précédentes, dans lequel la partie couvercle extérieur (310b, 510b) est fournie par une pluralité de panneaux (322, 314, 324, 316 ; 522, 514, 524, 516) formant une structure tubulaire.

10. Carton selon l'une quelconque des revendications précédentes, dans lequel le plateau intérieur (310a, 510a) est connecté à la partie couvercle extérieur (310b, 510b) par un agencement de panneau de connexion (334, 336 ; 534, 536) pour limiter le mouvement de glissement relatif entre eux.

11. Carton selon la revendication 10, dans lequel l'agencement de panneau de connexion (334, 336 ; 534, 536) est découpé dans l'un des panneaux (314 ; 514) formant la partie couvercle extérieur (310b, 510b) et connecté de façon articulée à celui-ci.

12. Carton selon la revendication 10 ou 11, dans lequel l'agencement de panneau de connexion (334, 336 ; 534, 536) servant à connecter le plateau intérieur (310a, 510a) à la partie couvercle extérieur (310b, 510b) comprend un premier panneau (334 ; 534) fixé à une section d'une paroi d'extrémité (330 ; 530) du plateau intérieur, et un deuxième panneau (336 ; 536) interconnecté de façon articulée au premier panneau (314 ; 514) et à la partie couvercle extérieur (310b ; 510b), les premier et deuxième panneaux étant agencés de manière à limiter le mouvement relatif du plateau intérieur et des parties couvercle extérieur.

13. Carton selon la revendication 12, dans lequel, lorsque le plateau est fermé, le deuxième panneau (336 ; 536) recouvre substantiellement le plateau intérieur (310a, 510a).

14. Carton selon l'une quelconque des revendications précédentes, dans lequel la partie couvercle extérieur (510b) a des extrémités fermées incluant des parois supérieure (514), de base (516) et latérales (522, 524), où le vide (v) est défini par une paroi d'extrémité inclinée (532) de la partie couvercle extérieur (510b) et la paroi d'extrémité (532) du plateau pour protéger le contenu du plateau.

15. Carton selon la revendication 14, dans lequel la paroi d'extrémité inclinée (532) définit un angle aigu avec la paroi inférieure (516) de la partie couvercle extérieur (510b) que la paroi de base (512) du plateau recouvre pour supporter le contenu du plateau et la paroi d'extrémité (532) du plateau s'étend vers le haut depuis la paroi de base (512) du plateau jusqu'à son extrémité supérieure (365) pour se mettre en prise avec la jonction entre la paroi d'extrémité inclinée (540) et la paroi supérieure d'enveloppe (514).

16. Découpe (310a ; 510a) pour former un carton comprenant un panneau de base (312 ; 512), des panneaux latéraux opposés (318, 320 ; 518, 520) et d'extrémité (330, 332 ; 530, 532) fixés de façon articulée au panneau de base (312 ; 512) pour former un plateau intérieur, **caractérisée en ce qu'**une deuxième découpe (310b; 510b) est fournie comprenant un panneau supérieur (314 ; 514), des panneaux latéraux opposés (322; 324 ; 522, 524) et un panneau de base (316 ; 516) connectés entre eux de façon articulée pour former une partie couvercle extérieur tubulaire, où le plateau intérieur ou la partie couvercle extérieur tubulaire est muni(e) d'une pluralité de panneaux (332 ; 333 ; 532, 533) pour former un vide (v) dans le plateau assemblé et une ouverture définie dans un ou plusieurs des panneaux (332 ; 532) formant le vide.

17. Découpe selon la revendication 16, dans laquelle une patte à presser (371 ; 571) est connectée de façon articulée à un bord (365 ; 565) de l'ouverture.

18. Découpe selon la revendication 16 ou 17, dans laquelle un panneau à déchirer (540) connecté à un panneau (514) de la partie couvercle extérieur (510b) cache l'ouverture de telle manière que le panneau à déchirer (540) doit être retiré pour que l'ouverture puisse être révélée.

19. Découpe selon la revendication 18, dans laquelle le panneau à déchirer (540) est défini par une ligne de pointillés (586), laquelle ligne de pointillés s'étend dans un panneau de paroi voisin (514) de la partie couvercle extérieur (570b) pour définir une entaille dans le panneau de paroi voisin lorsque le panneau à déchirer est ouvert par déchirement.

20. Découpe selon la revendication 19, dans laquelle la patte à presser (571) est connectée de façon articulée à une ligne de pointillés (573).

21. Découpe selon l'une quelconque des revendications 16 à 20, dans laquelle un panneau de cloison interne (333 ; 533) est connecté à l'un des panneaux (332 ; 532) formant le vide.

22. Découpe selon l'une quelconque des revendications 16 à 21, dans laquelle le plateau intérieur (310a ; 510a) est connecté à la partie couvercle extérieur (310b ; 510b) par un agencement de panneau de connexion (334, 336 ; 534, 536) pour limiter le mouvement de glissement relatif entre eux dans un carton assemblé.

23. Découpe selon la revendication 22, dans laquelle l'agencement de panneau de connexion (334, 336 ; 534, 536) pour connecter le plateau intérieur (310a ; 510a) à la partie couvercle extérieur (310b ; 510b) comprend un premier panneau (336 ; 536) fixé à une section d'extrémité d'un panneau de couvercle supérieur (314 ; 514) du plateau extérieur (310b ; 510b), et un deuxième panneau (334 ; 534) interconnecté de façon articulée au premier panneau (336 ; 536) et à un panneau de fixation extérieur (337 ; 537).

24. Carton selon l'une quelconque des revendications 1 et 2, dans lequel la pluralité de panneaux (332, 333, 335, 532, 533, 535) forme une section tubulaire à une extrémité du plateau, où une ouverture est définie dans un premier panneau de la section tubulaire, ladite structure tubulaire forme le vide (V), un deuxième panneau prévu dans la partie couvercle qui coopère avec le premier panneau de telle manière que le plateau intérieur et la partie couvercle sont initialement verrouillés ensemble par un adhésif, une partie du deuxième panneau forme le panneau à déchirer qui est détachable du deuxième panneau, une section découpée étant en outre prévue dans une paroi du plateau intérieur voisine de la section tubulaire du plateau intérieur pour faciliter l'accès aux articles contenus dans le plateau.
